# EUROPEAN PATENT APPLICATION

(11) **EP 3 457 317 A1**
(43) Date of publication of application: **20.03.2019**
(21) Application number: 18161169.0
(22) Date of filing: 12.03.2018
(51) Int. Cl.: G06K 9/00, G08G 1/0962

(54) **SIGNAL IDENTIFYING DEVICE, SIGNAL IDENTIFYING METHOD, AND DRIVING SUPPORT SYSTEM**

(30) Priority: 15.09.2017 JP 2017178306
(71) Applicant: Kabushiki Kaisha Toshiba, Minato-ku, Tokyo (JP); Toshiba Electronic Devices & Storage Corporation, Tokyo, 105-0023 (JP)
(72) Inventor: TIAN, Guifen, Tokyo, 105-8001 (JP); NISHIYAMA, Manabu, Tokyo, 105-0023 (JP)
(74) Representative: Hoffmann Eitle

(57) **Abstract**

A signal identifying device according to an embodiment includes a traffic light extractor, a lighting region extractor, and an identifier. The traffic light extractor extracts a region of a traffic light in a captured image. The lighting region extractor extracts a lighting region in the captured image. The identifier performs processing for identifying a lighting color of the traffic light on the basis of a position of the lighting region in the region of the traffic light.

## Description

### CROSS-REFERENCE TO RELATED APPLICATIONS

This application is based upon and claims the benefit of priority from the prior Japanese Patent Application No. 2017-178306, filed on September 15, 2017 the entire contents of which are incorporated herein by reference.

### FIELD

Embodiments of the present invention relate to a signal identifying device, a signal identifying method, and a driving support system.

### BACKGROUND

There are known methods of identifying, with image processing, a signal lamp from a captured image captured by a vehicle-mounted camera. In these identification methods by the image processing, in general, the signal lamp is identified on the basis of a color of light of a traffic light.

However, when a sunshine environment or the like changes, the colors of the signal lamp in the captured image change. Most of a signal lamp region in a captured image at night is saturated, which makes it difficult to identify the colors. Therefore, identification accuracy of the signal lamp in an image is likely to be deteriorated by the change of the sunshine environment or the like.

There are provided a signal identifying device, a signal identifying method, and a driving support system that more stably identify a lighting color of a traffic light even if a change of a sunshine environment or the like occurs.

### BRIEF DESCRIPTION OF THE DRAWINGS

FIG. 1 is a block diagram showing an overall configuration of a driving support system according to a first embodiment;
FIG. 2 is a diagram showing a plurality of images captured by an imaging device;
FIGS. 3(A) to 3(C) are diagrams showing examples of traffic lights set as identification targets of a signal identifying device;
FIG. 4 is a block diagram showing a configuration example of the signal identifying device;
FIG. 5 is a diagram showing regions of traffic lights and regions of lamp regions;
FIGS. 6(A) to 6(D) are diagrams showing an example of identification processing of a lighting color performed by an identifier;
FIG. 7 is a flowchart for explaining a processing example of the signal identifying device;
FIG. 8 is a block diagram showing the configurations of a traffic light extractor, a lighting region extractor, and an identifier according to a second embodiment;
FIGS. 9(A) to 9(C) are diagrams showing an example of a signal processing region;
FIGS. 10(A) to 10(C) are diagrams showing a calculation example of Co-occurrence Histograms of Oriented Gradients;
FIGS. 11(A) to 11(D) are diagrams schematically showing a luminance distribution of a street light and a luminance distribution of a signal lamp;
FIGS. 12(A) to 12(C) are diagrams showing a calculation example of Co-occurrence Histograms of Oriented Gradients for a lighting region;
FIGS. 13(A) to 13(C) are diagrams showing an image region excluding a background region and a saturated region and an image region applied with color processing;
FIGS. 14(A) and 14(B) are diagrams schematically showing luminance distributions of a short exposure image and a long exposure image;
FIG. 15 is a flowchart for explaining a processing example of a signal identifying device according to a second embodiment;
FIG. 16 is a flowchart for explaining an example of color processing of an identifier according to the second embodiment;
FIGS. 17(A) to 17(C) are diagrams showing a calculation example of Color-CoHOGs;
FIGS. 18(A) to 18(C) are diagrams showing a calculation example of color histograms; and
FIG. 19 is a diagram showing an example of feature values calculated by a first feature value calculator.

### DETAILED DESCRIPTION

A signal identifying device according to an embodiment includes a traffic light extractor, a lighting region extractor, and an identifier. The traffic light extractor extracts a region of a traffic light in a captured image. The lighting region extractor extracts a lighting region in the captured image. The identifier performs processing for identifying a lighting color of the traffic light on the basis of a position of the lighting region in the region of the traffic light.

Driving support systems according to embodiments of the present invention are explained in detail with reference to the drawings. Note that the embodiments explained below are examples of embodiments of the present invention. The present invention is not interpreted to be limited to the embodiments. In the drawings referred to in the embodiments, the same portions or portions having the same functions are denoted by the same or similar reference numerals and signs. Repeated explanation of the portions is sometimes omitted. Dimension ratios of the drawings are sometimes different from actual ratios for convenience of explanation. A part of components is sometimes omitted from the drawings.

### (First Embodiment)

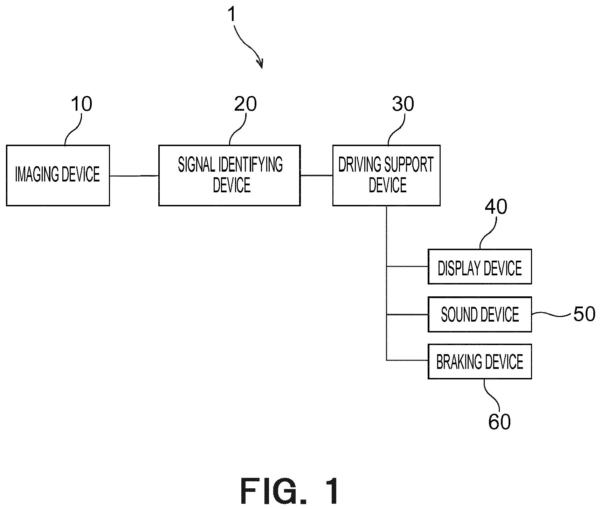

FIG. 1 is a block diagram showing an overall configuration of a driving support system 1 according to a first embodiment. As shown in FIG. 1, the driving support system 1 is a system that identifies signal lamps with a captured image and supports driving of a vehicle. More specifically, the driving support system 1 includes an imaging device 10, a signal identifying device 20, a driving support device 30, a display device 40, a sound device 50, and a braking device 60.

The imaging device 10 is mounted on, for example, a vehicle and captures a plurality of images with different exposure times. The imaging device 10 is an imaging sensor in which, for example, pixels are disposed in a two-dimensional planar shape. Each of the pixels is configured by four imaging elements. The four imaging elements have an equivalent structure. Exposure times of the respective four imaging elements are different. That is, the imaging device 10 captures a captured image of short exposure, a captured image of intermediate exposure 1 a captured image of intermediate exposure 2e, and a captured image of long exposure in ascending order of the exposure times.

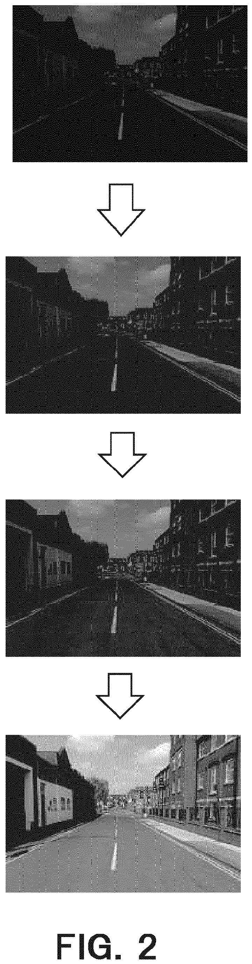

FIG. 2 is a diagram showing a plurality of captured images with different exposure times captured by the imaging device 10. The images are images captured at night. As shown in FIG. 2, the captured image of the short exposure, the captured image of the intermediate exposure 1e, the captured image of the intermediate exposure 2e , and the captured image of the long exposure are shown in order from the top. As it is seen from the figure, in the captured image of the long exposure, edges and the like of objects can be clearly imaged even at night.

As shown in FIG. 1, the signal identifying device 20 identifies a lighting color of the traffic light using a captured image captured by the imaging device 10. A detailed configuration of the signal identifying device 20 is explained below.

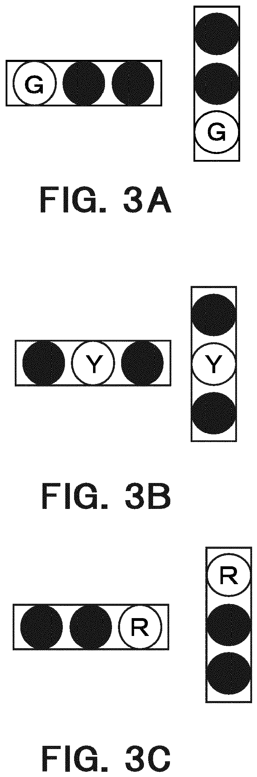

FIGS. 3(A) to 3(C) are diagrams showing examples of traffic lights set as identification targets of the signal identifying device 20. FIG. 3(A) is an example in which green (G) is lit. FIG. 3(B) is an example in which yellow (Y) is lit. FIG. 3(C) is an example in which red (R) is lit. As shown in FIGS. 3(A) to 3(C), an identification target of the signal identifying device 20 is, for example, a traffic light for vehicles. The traffic light includes, for example, lighting instruments of three lights for green (G), yellow (Y), and red (R). A laterally long traffic light is shown on the left sides of FIGS. 3(A) to 3(C). A longitudinally long traffic light is shown on the right sides of FIGS. 3(A) to 3(C). Note that, in this embodiment, the traffic light for vehicles is explained as an example. However, the identification target is not limited to this. Traffic lights including lighting instruments of two lights such as a traffic light for pedestrians and a railroad crossing light are also included in the identification target.

As shown in FIG. 1, the driving support device 30 supports driving of a vehicle according to an output signal of the signal identifying device 20. The display device 40, the sound device 50, the braking device 60, and the like are connected to the driving support device 30.

The display device 40 is, for example, a monitor. The display device 40 is disposed in a position where the display device 40 is visually recognizable from a driver's seat in the vehicle. For example, the driving support device 30 causes, on the basis of an output signal of the signal identifying device 20, the display device 40 to display a schematic view of a traffic light. More in detail, when the signal identifying device 20 identifies a color of a signal lamp as green, the display device 40 performs processing for increasing the luminance of a green lamp region in the schematic view of the traffic light. Similarly, when the signal identifying device 20 identifies the color of the signal lamp as yellow, the display device 40 performs processing for increasing the luminance of a yellow lamp region in the schematic view of the traffic light. Similarly, when the signal identifying device 20 identifies the color of the signal lamp as red, the display device 40 performs processing for increasing the luminance of a red lamp region in the schematic view of the traffic light. Consequently, for example, even when it is difficult to identify the traffic light because of backlight or the like, a driver or the like is capable of easily identifying a lighting color of the traffic light by visually recognizing the display device 40.

The sound device 50 is, for example, a speaker. The sound device 50 is disposed in a position where the sound device 50 is audible from the driver's seat in the vehicle. For example, the driving support device 30 causes, on the basis of an output signal of the signal identifying device 20, the sound device 50 to emit sound such as "the traffic light is red". Consequently, for example, even when the attention of the driver decreases, the driver is capable of easily identifying the lighting color of the traffic light by hearing the sound.

The braking device 60 is, for example, an auxiliary brake. The braking device 60 brakes the vehicle on the basis of an instruction signal of the driving support device 30. For example, when the signal identifying device 20 identifies the lighting color of the traffic light as red, the driving support device 30 causes the braking device 60 to brake the vehicle.

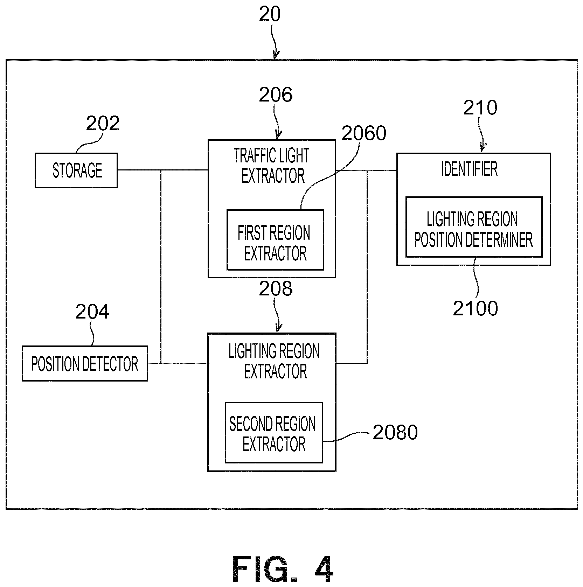

FIG. 4 is a block diagram showing a detailed configuration example of the signal identifying device 20. As shown in FIG. 4, the signal identifying device 20 includes a storage 202, a position detector 204, a traffic light extractor 206, a lighting region extractor 208, and an identifier 210. The storage 202 is realized by, for example, a semiconductor memory element such as a RAM (Random Access Memory) or a flash memory, a hard disk, or an optical disk. The storage 202 stores captured images captured by the imaging device 10. The storage 202 has stored therein map information in which position information of traffic lights according to this embodiment is recorded.

The position detector 204 is mounted on a vehicle. The position detector 204 detects the position and the traveling direction of the vehicle. The position detector 204 includes, for example, a gyroscope and a GPS receiver. The position detector 204 detects the position and the traveling direction of the vehicle using output signals of the gyroscope and the GPS receiver.

Each of the traffic light extractor 206, the lighting region extractor 208, and the identifier 210 is realized by a hardware configuration. For example, each of the position detector 204, the traffic light extractor 206, the lighting region extractor 208, and the identifier 210 is constituted by a circuit.

The traffic light extractor 206 extracts a region of the traffic light in a captured image. The traffic light extractor 206 according to this embodiment includes a first region extractor 2060. The first region extractor 2060 extracts, as regions of the traffic light, a laterally long rectangular region and a longitudinally long rectangular region in the captured image. The traffic light extractor 206 extracts a rectangular region with, for example, square extraction processing obtained by combining extraction processing for a linear edge and Hough transform processing. The square extraction processing in the first region extractor 2060 is not limited to this. General processing for extracting a square region by image processing may be used. For example, the traffic light extractor 206 extracts the region of the traffic light in the captured image using a captured image of the intermediate exposure 2e or the long exposure stored in the storage 202. Consequently, it is possible to prevent a decrease in extraction accuracy of edges even at night. Note that, when the region of the traffic light in the captured image and a lighting region extracted by the lighting region extractor 208 that is explained below do not overlap, the traffic light extractor 206 may exclude, in advance, from an extraction target, the region of the traffic light that does not overlap the lighting region extracted by the lighting region extractor 208.

The lighting region extractor 208 extracts a lighting region in the captured image. The lighting region extractor 208 according to this embodiment includes a second region extractor 2080. The second region extractor 2080 extracts high luminance regions in the captured image as lighting regions. The traffic light extractor 206 combines, for example, threshold processing for a pixel value and labeling processing and extracts, as the lighting regions, isolated high luminance regions, which are regions in a predetermined area range. Extraction processing for the lighting regions in the second region extractor 2080 is not limited to this. The second region extractor 2080 may extract the lighting regions with generally-known image processing. The lighting region extractor 208 extracts the lighting regions in the captured image using, for example, captured images of the short exposure or the intermediate exposure 1e stored in the storage 202. Note that, when a lighting region in the captured image and the region of the traffic light extracted by the traffic light extractor 206 do not overlap, the lighting region extractor 208 may exclude, in advance, from the extraction target, the lighting region that does not overlap the region of the traffic light extracted by the traffic light extractor 206.

In this way, the traffic light extractor 206 extracts the region of the traffic light from a captured image in a first exposure time, for example, the captured image of the intermediate exposure 2e or the long exposure. The lighting region extractor 208 extracts the lighting regions from a captured image in a second exposure time shorter than the first exposure time, for example, the captured image of the short exposure or the intermediate exposure 1e. Consequently, the traffic light extractor 206 is capable of preventing a decrease in extraction accuracy of the region of the traffic light even at dusk or at night. On the other hand, the traffic light extractor 206 is capable of preventing saturation of pixels of the lighting region or occurrence of halation or the like by using a captured image in a shorter exposure time. As it is seen from this, extraction accuracy of the traffic light extractor 206 and extraction accuracy of the lighting region extractor 208 are prevented from decreasing by using captured images in exposure times matching the processing of the traffic light extractor 206 and the lighting region extractor 208.

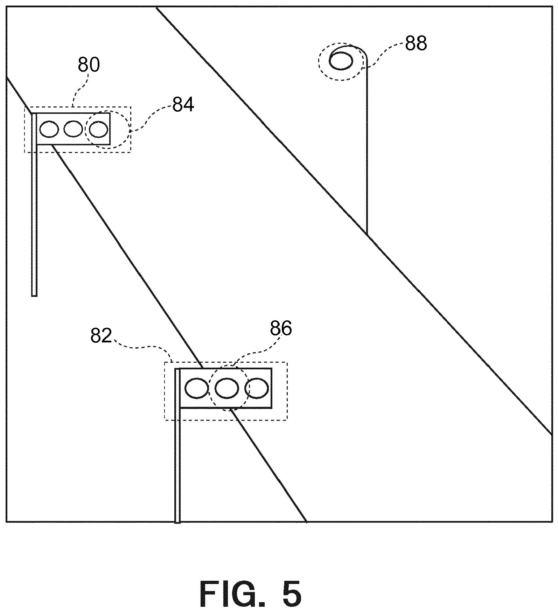

FIG. 5 is a diagram showing regions of traffic lights extracted by the traffic light extractor 206 and regions of lighting regions extracted by the lighting region extractor 208. As shown in FIG. 5, the traffic light extractor 206 extracts squares 80 and 82 as the regions of the traffic lights. On the other hand, the lighting region extractor 208 extracts lighting regions 84, 86, and 88. In this way, a street light or the like is included in the lighting regions extracted by the lighting region extractor 208. Regions other than the traffic light are likely to be included in the regions of the traffic lights extracted by the traffic light extractor 206.

As shown in FIG. 4, the identifier 210 identifies the lighting color of the traffic light on the basis of the position of the lighting region extracted by the lighting region extractor 208 in the region of the traffic light extracted by the traffic light extractor 206. That is, when the lighting region extracted by the lighting region extractor 208 is included in the region of the traffic light extracted by the traffic light extractor 206, the identifier 210 identifies a combination of the region of the traffic light and the lighting region as the traffic light. On the other hand, when the lighting region extracted by the lighting region extractor 208 is not included in the region of the traffic light extracted by the traffic light extractor 206, the identifier 210 identifies that the lighting region extracted by the lighting region extractor 208 is not the traffic light. When the lighting region extracted by the lighting region extractor 208 is not included in the region of the traffic light extracted by the traffic light extractor 206, the identifier 210 excludes the traffic light extracted by the traffic light extractor 206 from the region of the traffic light.

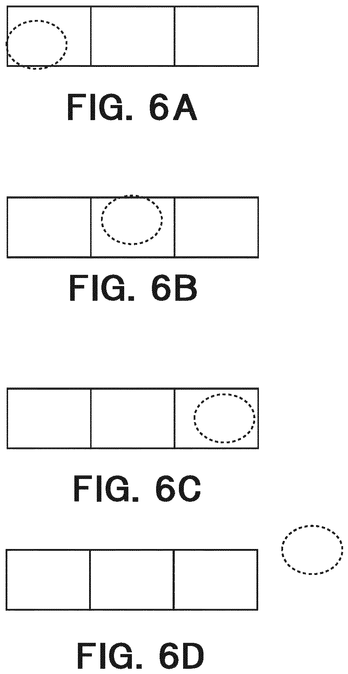

A more specific example is explained with reference to FIGS. 6(A) to 6(D). FIGS. 6(A) to 6(D) are diagrams showing examples of identification processing for a lighting color performed by the identifier 210. FIG. 6(A) is an example in which green (G) is lit. FIG. 6(B) is an example in which yellow (Y) is lit. FIG. 6(C) is an example in which red (R) is lit. FIG. 6(D) is an example in which a lighting region is not a traffic light. A dotted light indicates a lighting region. A rectangle of the outermost frame indicates a region of a traffic light. As shown in FIGS. 6(A) to 6(D), the identifier 210 divides the region of the traffic light extracted by the traffic light extractor 206 into a plurality of regions and identifies a lighting color of the traffic light on the basis of a region including the lighting region extracted by the lighting region extractor 208 among the plurality of regions.

More in detail, the identifier 210 divides the region of the traffic light into three regions and outputs, according to in which of the three regions the position of the lighting region is located, at least one output signal among a first output signal corresponding to green, a second output signal corresponding to yellow, and a third output signal corresponding to red. For example, when the lighting region is located in a region at the left end as shown in FIG. 6(A), the identifier 210 outputs the first output signal corresponding to green. Similarly, when the lighting region is located in a region in the center as shown in FIG. 6(B), the identifier 210 outputs the second output signal corresponding to yellow. Similarly, when the lighting region is located in a region at the right end as shown in FIG. 6(C), the identifier 210 outputs the third output signal corresponding to red. On the other hand, the identifier 210 identifies that a lighting region not included in the region of the traffic light extracted by the traffic light extractor 206 as shown in FIG. 6(D) is a street light or the like and is not a signal lamp.

Note that the lighting region sometimes cannot be extracted when a signal lamp is flashing or because of the influence of flicker. Therefore, the lighting region may be extracted from images for several frames captured in time series. The identifier 210 may output an output signal indicating no light.

The same applies to a vertical-type traffic light. When the lighting region is located in a region at the lower end, the identifier 210 outputs the first output signal corresponding to green. When the lighting region is located in a region in the center, the identifier 210 outputs the second output signal corresponding to yellow. When the lighting region is located in a region at the upper end, the identifier 210 outputs the third output signal corresponding to red. In the case of a two lamp-type traffic light, the identifier 210 divides a region into two regions and outputs, according to in which of the two regions the position of the lighting region is located, at least one output signal of the first output signal corresponding to green and the third output signal corresponding to red.

The identifier 210 identifies, on the basis of the position and the traveling direction of the vehicle detected by the position detector 204 (FIG. 4) and the position information of traffic lights stored in the storage 202 (FIG. 4), a type of a traffic light that should be captured in a captured image from the vehicle in the present position. Consequently, the identifier 210 specifies the number of divisions in a candidate region of the traffic light and arrangement of signals.

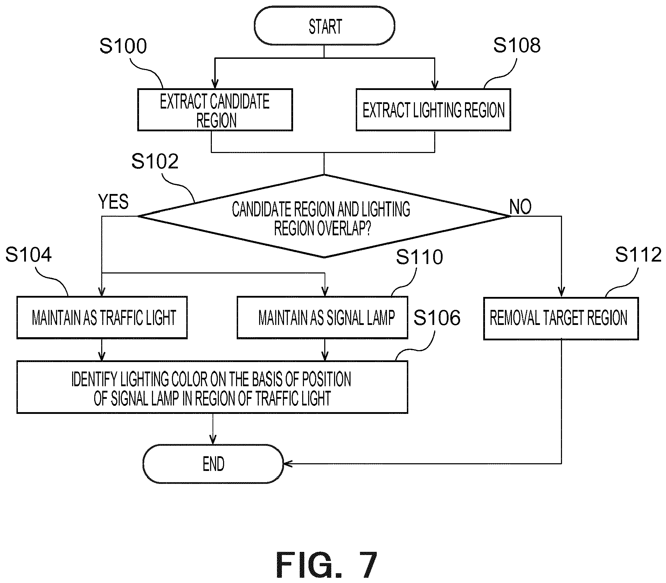

FIG. 7 is a flowchart for explaining a processing example of the signal identifying device 20. As shown in FIG. 7, the traffic light extractor 206 extracts, for example, a candidate region of a traffic light in a captured image of the long exposure (step S100). The identifier 210 determines whether the candidate region of the traffic light and a lighting region extracted by the lighting region extractor 208 overlap (step S102). When the candidate region of the traffic light and the lighting region overlap (YES in step S102), the identifier 210 maintains the region of the traffic light as the region of the traffic light (step S104). For example, when 80% or more of the lighting region extracted by the lighting region extractor 208 is included in the candidate region of the traffic light, the identifier 210 maintains the region of the traffic light as the region of the traffic light. The identifier 210 identifies a lighting color of the traffic light on the basis of the position of a signal lamp region in a region of the traffic light extracted by the traffic light extractor 206 (step S106).

On the other hand, the lighting region extractor 208 extracts a lighting region from, for example, a captured image of the intermediate exposure 1e (step S108). When the region of the traffic light extracted by the traffic light extractor 206 and the lighting region extracted by the lighting region extractor 208 overlap (YES in step S102), the identifier 210 maintains the lighting region as the lighting region (step S110).

When the region of the traffic light extracted by the traffic light extractor 206 and the lighting region extracted by the lighting region extractor 208 do not overlap (NO in step S102), the identifier 210 excludes the region of the traffic light extracted by the traffic light extractor 206 from the region of the traffic light, excludes the lighting region extracted by the lighting region extractor 208 from the lighting region (step S112), and ends the entire processing. Note that the processing in step S100 and the processing in step S108 may be simultaneously performed. Alternatively, the processing in step S100 may be performed after the processing in step S108 is performed. In this way, when the region of the traffic light extracted by the traffic light extractor 206 and the lighting region overlap, the identifier 210 identifies the lighting color of the traffic light on the basis of the position of the lighting region in the region of the traffic light.

As explained above, according to this embodiment, the identifier 210 identifies the lighting color of the traffic light on the basis of the position of the lighting region extracted by the lighting region extractor 208 in the region of the traffic light extracted by the traffic light extractor 206. The lighting region is stably extracted even if color processing or the like is not performed. Therefore, it is possible to more stably identify the lighting color of the traffic light without being affected by a color change of a captured image due to a change of a sunshine environment or the like.

### (Second Embodiment)

In a second embodiment, color processing is added to the identification processing to improve identification accuracy of a signal lamp. Differences from the first embodiment are explained below.

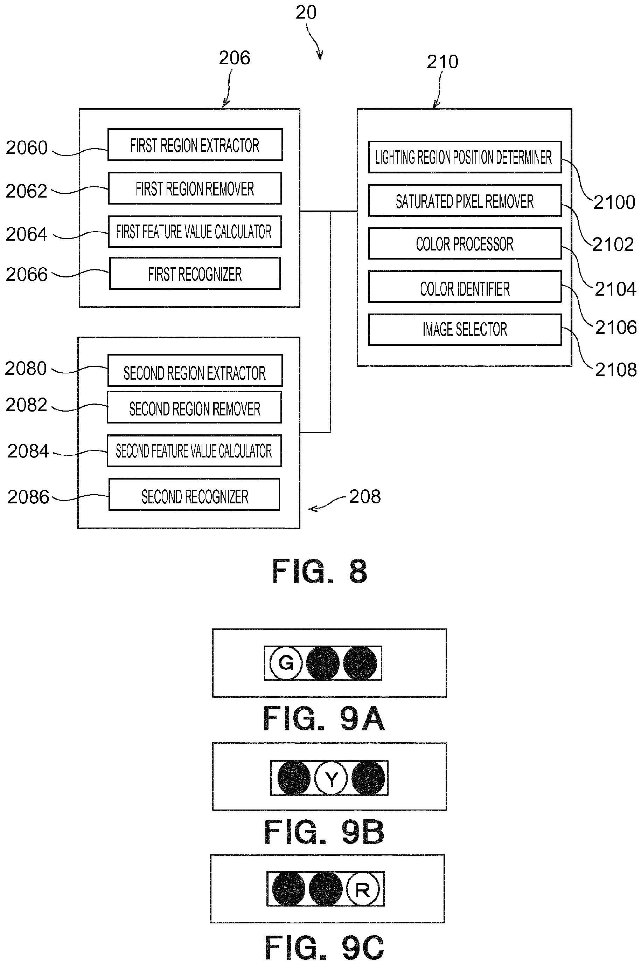

FIG. 8 is a block diagram showing the configurations of the traffic light extractor 206, the lighting region extractor 208, and the identifier 210 according to the second embodiment. As shown in FIG. 8, the lighting region extractor 208 includes the first region extractor 2060, a first region remover 2062, a first feature value calculator 2064, and a first recognizer 2066. The lighting region extractor 208 includes the second region extractor 2080, a second region remover 2082, a second feature value calculator 2084, and a second recognizer 2086. The identifier 210 includes a lighting region position determiner 2100, a saturated pixel remover 2102, a color processor 2104, a color identifier 2106, and an image selector 2108. Note that a captured image according to the second embodiment is an RGB color image.

The first region extractor 2060 extracts a laterally long rectangular region and a longitudinally long rectangular region in the captured image as candidate regions of the traffic light. Note that the traffic light extractor 206 according to the second embodiment selects a traffic light region out of the rectangular regions extracted by the first region extractor 2060. Therefore, the rectangular regions extracted by the first region extractor 2060 are referred to as first candidate regions of the traffic light.

The first region remover 2062 extracts, on the basis of the position and the direction of a vehicle, position information of the traffic light, and the captured image, a second candidate region out of the first candidate regions extracted by the first region extractor 2060. More specifically, the first region remover 2062 calculates, on the basis of the position and the traveling direction of the vehicle detected by the position detector 204 (FIG. 4) and the position information of traffic lights stored in the storage 202 (FIG. 4), a position in the captured image of the traffic light that should be captured in the captured image from the vehicle in the present position. Subsequently, the first region remover 2062 removes the first candidate region not included in a predetermined range from the position in the captured image of the traffic light that should be imaged. In other words, the first region remover 2062 extracts, as the second candidate region, the first candidate region included in the predetermined region from the position in the captured image of the traffic light that should be imaged.

The first feature value calculator 2064 extracts a signal processing region including the second candidate region extracted by the first region remover 2062 and calculates a feature value on the basis of the signal processing region.

FIGS. 9(A) to 9(C) are diagrams showing examples of the signal processing region. FIG. 9(A) is an example in which green (G) is lit. FIG. 9(B) is an example in which yellow (Y) is lit. FIG. 9(C) is an example in which red (R) is lit. As shown in FIGS. 9(A) to 9(C), first, the first feature value calculator 2064 normalizes the captured image to set the longitudinal and lateral lengths of the second candidate region, that is, the traffic light region to specific lengths and extracts, as the signal processing region, an image region including the normalized traffic light region. In this case, the longitudinal and lateral lengths of the signal processing region are set to, for example, doubles of the longitudinal and lateral lengths of the traffic light region. Like the laterally long traffic light region, a longitudinally long traffic light region is rotated 90 degrees to set the signal processing region.

The first feature value calculator 2064 shown in FIG. 8 calculates a feature value on the basis of the captured image in the signal processing region. For example, as the feature value, Co-occurrence Histograms of Oriented Gradients is used. However, the feature value is not limited to this and may be a Haar-like characteristic or the like. Note that the position detector 204 (FIG. 4) sometimes cannot receive a GPS signal. The first feature value calculator 2064 may calculate a feature value for the first candidate regions extracted by the first region extractor 2060 without the processing by the first region remover 2062.

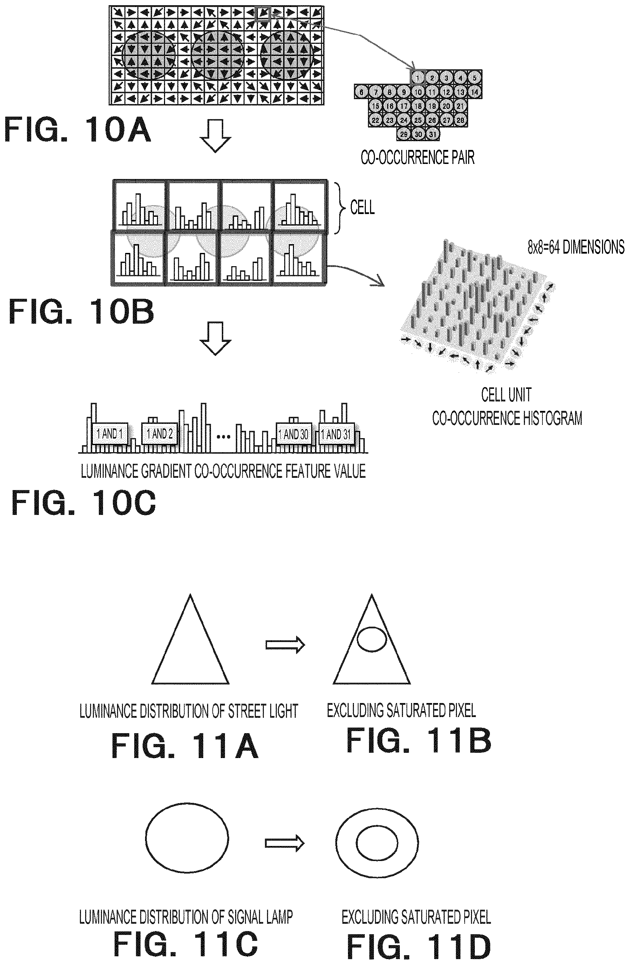

FIGS. 10(A) to 10(C) are diagrams showing calculation examples of the Co-occurrence Histograms of Oriented Gradients (CoHOG). As shown in FIGS. 10(A) to 10(C), the first feature value calculator 2064 calculates luminance gradient vectors and calculates, as the Co-occurrence Histograms of Oriented Gradients, appearance frequencies of combinations of the luminance gradient vectors. More specifically, the first feature value calculator 2064 divides the signal processing region into, for example, eight cells, arranges the calculated Co-occurrence Histograms of Oriented Gradients in order for each of the cells to calculate the feature value. The Co-occurrence Histograms of Oriented Gradients are calculated for combinations among vectors in a positional relation indicated as co-occurrence pairs. The Co-occurrence Histograms of Oriented Gradients can represent structure information of an object more in detail than a normal Histogram of Oriented Gradient (HOG).

The first recognizer 2066 shown in FIG. 8 is, for example, a recognizer. The first recognizer 2066 recognizes, on the basis of the feature value calculated by the first feature value calculator 2064, whether the second candidate region is a region of the traffic light. The recognizer learns, as a positive pattern, a feature value calculated from the captured image on the basis of an actual traffic light and learns, as a negative pattern, a feature value calculated from the captured image on the basis of a rectangular region such as a windshield or a structure portion of a building. That is, when the feature value calculated on the basis of the signal processing region by the first feature value calculator 2064 satisfies a predetermined condition, the first recognizer 2066 recognizes the second candidate region as a region of the traffic light. The traffic light extractor 206 finally extracts, as the region of the traffic light, a candidate region recognized as the region of the traffic light by the first recognizer 2066. In this way, since the recognition processing is added, the traffic light extractor 206 is capable of extracting a traffic light region reflecting texture information such as an edge structure of the captured image. The extraction accuracy of the region of the traffic light is further improved.

The second region extractor 2080 extracts, as candidate regions of the lighting regions, high-luminance regions having a predetermined size. Note that the traffic light extractor 206 according to the second embodiment selects a lighting region out of the lighting regions extracted by the second region extractor 2080. Therefore, the lighting regions extracted by the second region extractor 2080 are referred to as first candidate regions of the lighting regions.

Like the first region remover 2062, the second region remover 2082 calculates, on the basis of the position and the traveling direction of the vehicle detected by the position detector 204 (FIG. 4) and the position information of traffic lights stored in the storage 202 (FIG. 4), a position in the captured image of the traffic light that should be captured in the captured image from the vehicle in the present position. Subsequently, the first region remover 2062 removes the first candidate region not included in a predetermined range from the position in the captured image of the traffic light that should be imaged. In other words, the second region remover 2082 extracts, as the second candidate region, the first candidate region included in the predetermined range from the position in the captured image of the traffic light that should be imaged.

FIGS. 11(A) to 11(D) are diagrams schematically showing a luminance distribution of a street light and a luminance distribution of a signal lamp. FIG. 11(A) is a diagram schematically showing a luminance distribution of a downward street light. FIG. 11(B) is a diagram showing a region obtained by excluding a high-luminance region, for example, a saturated pixel from the luminance distribution of the downward street light. FIG. 11(C) is a diagram schematically showing a luminance distribution a signal lamp. FIG. 11(D) is a diagram showing a region obtained by excluding a high-luminance region, for example, a saturated pixel from the luminance distribution of the signal lamp.

As shown in FIG. 11(A), the street light or the like irradiates light toward one direction, for example, the downward direction. A luminance distribution of such a light source that irradiates the light toward one direction tends to spread in a direction in which the light source is directed. Therefore, for example, the center of gravity of the luminance distribution of the street light shown in FIG. 11(A) tends to deviate from a saturated region shown in FIG. 11(B).

On the other hand, as shown in FIG. 11(C), the signal lamp irradiates light in multiple directions. Therefore, the luminance distribution is like a circle. Therefore, for example, the gravity of the luminance distribution of the street light shown in FIG. 11(A) tends to deviate from the saturated region shown in FIG. 11(B). On the other hand, the center of gravity of the luminance distribution of the signal lamp shown in FIG. 11(C) tends to be located inside the saturated region. The second region remover 2082 performs, on the basis of such characteristics, processing for removing the first candidate region, the center of gravity of a luminance distribution of which deviates from the high-luminance region within the lighting region, for example, the saturated region from the first candidate regions extracted by the second region extractor 2080. In other words, the second region remover 2082 extracts the first candidate region having a predetermined luminance distribution as the second candidate region.

Like the first feature value calculator 2064, the second feature value calculator 2084 extracts a signal processing region including the second candidate region extracted by the second region remover 2082 and calculates a feature value on the basis of the signal processing region. In this case, aspect ratios of the first candidate regions of the lighting region are normalized to be the same. The longitudinal length and the lateral length of the signal processing region are equal and respectively set to doubles of the longitudinal length and the lateral length of the first candidate regions.

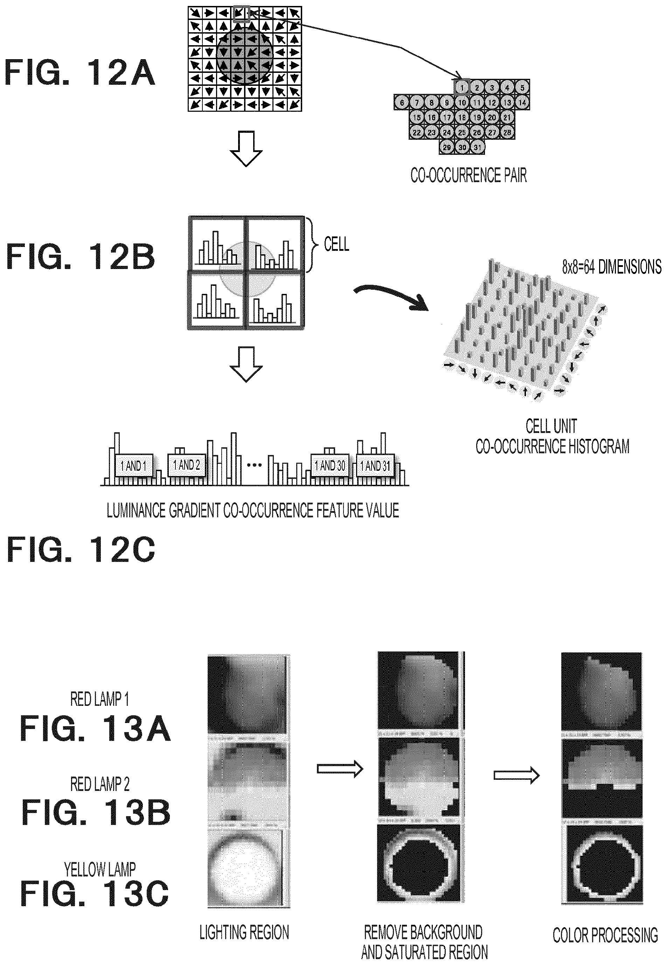

Like the first feature value calculator 2064, the second feature value calculator 2084 shown in FIG. 8 calculates a feature value on the basis of the captured image in the signal processing region. FIGS. 12(A) to 12(C) are diagrams showing a calculation example of Co-occurrence Histograms of Oriented Gradients (CoHOG) for a lighting region. As shown in FIGS. 12(A) and 12(B), the second feature value calculator 2084 calculates luminance gradient vectors and calculates, as the Co-occurrence Histograms of Oriented Gradients, appearance frequencies of combinations of the luminance gradient vectors. More specifically, the second feature value calculator 2084 divides the signal processing region into, for example, four cells, arranges the calculated Co-occurrence Histograms of Oriented Gradients in order for each of the cells to calculate the feature value. In this way, the number of cells for the lighting region is reduced from the number of cells for the candidate regions of the traffic light.

Like the first recognizer 2066, the second recognizer 2086 shown in FIG. 8 is, for example, a recognizer. The second recognizer 2086 recognizes, on the basis of the feature value calculated by the second feature value calculator 2084, whether the second candidate region is a lighting region based on a signal lamp. The recognizer learns, as a positive pattern, a feature value calculated from the captured image on the basis of an actual traffic light and learns, as a negative pattern, a feature value calculated from the captured image on the basis of a high-luminance region such as a street light or a tail lamp of an automobile. That is, when the feature value calculated on the basis of the signal processing region by the second feature value calculator 2084 satisfies a predetermined condition, the second recognizer 2086 recognizes the second candidate region as a lighting region based on the signal lamp. The lighting region extractor 208 finally extracts, as the lighting region, a candidate region recognized as the lighting region based on the signal lamp by the second recognizer 2086. In this way, since the recognition processing is added, the lighting region extractor 208 is capable of extracting a lighting region that reflects texture information such as an edge structure of the captured image.

The lighting region position determiner 2100 shown in FIG. 8 determines a position of the lighting region extracted by the lighting region extractor 208 in the region of the traffic light extracted by the traffic light extractor 206. For example, as shown in FIGS. 6(A) to 6(D), the lighting region position determiner 2100 equally divides a region of the traffic light extracted by the traffic light extractor 206 into, for example, three and determines in which of a region at the left end, a region in the center, and a region at the right end the lighting region is located. Consequently, the identifier 210 applies color processing corresponding to the position of the lighting region in the region of the traffic light.

The lighting region position determiner 2100 identifies, on the basis of the position and the traveling direction of the vehicle detected by the position detector 204 (FIG. 4) and the position information of traffic lights stored in the storage 202 (FIG. 4), a type of the traffic light that should be captured in a captured image from the vehicle in the present position. Consequently, the lighting region position determiner 2100 specifies the number of divisions in the region of the traffic light and arrangement of signals.

FIGS. 13(A) to 13(C) are diagrams showing an image region excluding a background region and a saturated region from a lighting region and an image region applied with color processing. FIG. 13(A) shows an example of a red lamp 1. FIG. 13(B) shows an example of a red lamp 2. FIG. 13(C) shows an example of a yellow lamp. Images in the middle column respectively show image examples excluding a saturated pixel and the background region. Images in the right column respectively show images obtained by further applying color processing to the image excluding the saturated pixel and the background region. A difference between the red lamp 1 and the red lamp 2 is a ratio of a green component in the lighting region. That is, approximately 20% of a region of the red lamp 1 is a green component. Approximately 60% of a region of the red lamp 2 is a green component. Note that details of the color processing are explained below.

For example, as shown in the images in the middle column in FIGS. 13(A) to 13(C), the saturated pixel remover 2102 performs processing for removing the saturated pixel and a pixel value equal to or smaller than a predetermined value, that is, the background region from the lighting region extracted by the lighting region extractor 208. Consequently, it is possible to remove a region unrelated to a color component of a signal lamp from the lighting region.

The color processor 2104 applies color processing corresponding to the position of the lighting region determined by the lighting region position determiner 2100 to the remaining pixels excluding the saturated pixel in the lighting region removed by the saturated pixel remover 2102. More specifically, the color processor 2104 converts the remaining pixels excluding the saturated pixel in the lighting region into an HSV color system and applies color processing corresponding to the position of a lamp region to the remaining pixels. For example, if the lighting region determined by the lighting region position determiner 2100 is the left end, the color processor 2104 removes pixels other than pixels equivalent to green. More in detail, the color processor 2104 performs processing for removing pixels having values of H equal to or smaller than 150 and pixels having values of H equal to or larger than 200.

Similarly, if the lighting region determined by the lighting region position determiner 2100 is the center, the color processor 2104 removes pixels other than pixels equivalent to yellow. More in detail, if the lighting region is the center, the color processor 2104 performs processing for removing pixels having values of H equal to or smaller than 9 and pixels having values of H equal to or larger than 30.

Similarly, if the lighting region determined by the lighting region position determiner 2100 is the right end, the color processor 2104 removes pixels other than pixels equivalent to red. More in detail, if the lighting region determined by the lighting region position determiner 2100 is the right end, the color processor 2104 performs processing for removing pixels having values of H equal to or larger than 8. In this way, if the lighting region is the left end, only the pixels equivalent to green remain. If the lighting region is the center, only the pixels equivalent to yellow remain. If the lighting region is the right end, only the pixels equivalent to red remain.

The color identifier 2106 extracts a predetermined color component on the basis of the position of the lighting region in the region of the traffic light determined by the lighting region position determiner 2100 and outputs a signal corresponding to the extracted predetermined color component. That is, if the lighting region determined by the lighting region position determiner 2100 is the left end and a predetermined number or more of pixels equivalent to green remain in the image region processed by the color processor 2104, the color identifier 2106 outputs a first output signal corresponding to green. Similarly, if the lighting region determined by the lighting region position determiner 2100 is the center and a predetermined number or more of pixels equivalent to yellow remain in the image region processed by the color processor 2104, the color identifier 2106 outputs a second output signal corresponding to yellow. Similarly, if the lighting region determined by the lighting region position determiner 2100 is the right end and a predetermined number or more of pixels equivalent to red remain in the image region processed by the color processor 2104, the color identifier 2106 outputs a third output signal corresponding to red. As in the past, if the traffic light is identified by a color component in the luminance region in the traffic light, the red lamp 2 is identified as green. However, since the color processing corresponding to the position of the lighting region in the region of the traffic light is applied in advance, it is possible to prevent such misidentification.

The image selector 2108 selects an image in a specific exposure time on the basis of a state of a luminance distribution of a region of a signal lamp in each of a plurality of images captured in different exposure times. More specifically, the image selector 2108 selects captured images respectively suitable for the traffic light extractor 206 and the lighting region extractor 208 out of a captured image of the short exposure, a captured image of the intermediate exposure 1e, a captured image of the intermediate exposure 2e , and a captured image of the long exposure.

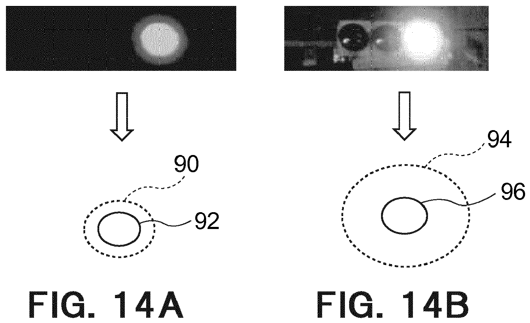

FIGS. 14(A) and 14(B) are diagrams schematically showing luminance distributions of a short exposure image and a long exposure image. A processing example of the image selector 2108 is explained with reference to FIGS. 14(A) and 14(B). A figure on the upper side of FIG. 14(A) shows an image of a red lamp of the short exposure. The figure on the lower side of FIG. 14(A) shows a luminance distribution range 90 and a high-luminance region 92 of the red lamp. A figure on the upper side of FIG. 14(B) shows an image of the red lamp of the long exposure in the same range as the figure on the upper side of FIG. 14(A). A figure on the lower side of FIG. 14(B) shows a luminance distribution range 94 and a high-luminance region 96 of red lamp.

As it is seen from these figures, a ratio of the luminance distribution range 90 and the high-luminance region 92 and a ratio of the luminance distribution range 94 and the high-luminance region 96 change according to an exposure time. The image selector 2108 selects captured images respectively suitable for the traffic light extractor 206 and the lighting region extractor 208 out of the captured image of the short exposure, the captured image of the intermediate exposure 1e, the captured image of the intermediate exposure 2e , and the captured image of the long exposure on the basis of these characteristics and ratios of luminance distribution ranges and high-luminance regions. For example, edge information is important in the captured image used in the traffic light extractor 206. Therefore, the image selector 2108 selects a captured image in which a ratio of a luminance distribution range to a high-luminance region has a first predetermined value. On the other hand, in the captured image used in the lighting region extractor 208, a smaller range of a lighting region and a smaller range of a saturated region are important. Therefore, the image selector 2108 selects a captured image in which a ratio of a luminance distribution range to a high-luminance region has a second predetermined value. That is, the first predetermined value used for extraction of a traffic light is larger than the second predetermined value used for extraction of a lighting region. Consequently, it is possible to select a captured image in an exposure time corresponding to a sunshine environment such as daytime, dusk, or night. It is possible to reduce the influence of the sunshine environment.

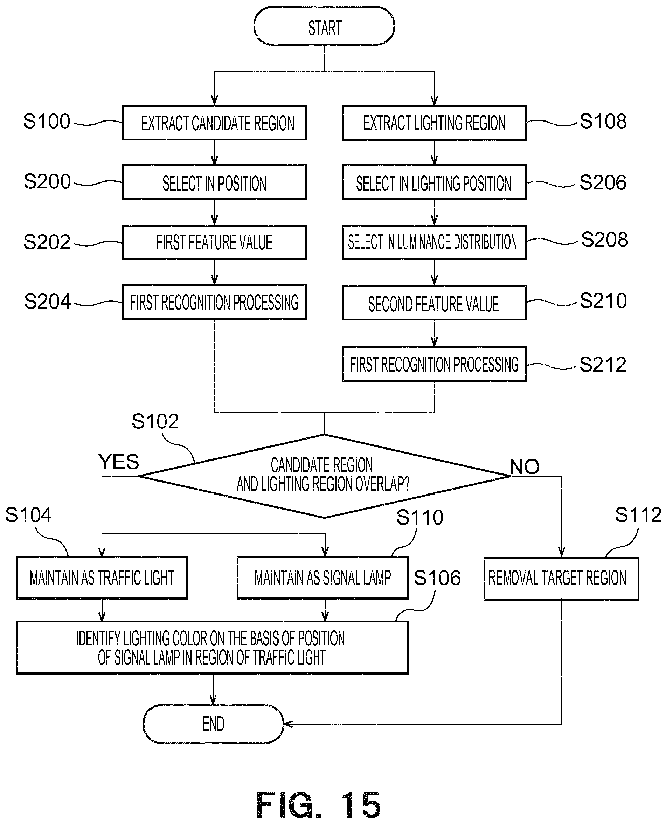

FIG. 15 is a flowchart for explaining a processing example of the signal identifying device according to the second embodiment. Differences from the processing example of the signal identifying device 20 according to the first embodiment are explained. As shown in FIG. 15, the first region remover 2062 extracts, on the basis of the position and the direction of the vehicle, the position information of traffic lights, and the captured image, the second candidate region out of the first candidate regions extracted by the first region extractor 2060 (step S200).

Subsequently, the first feature value calculator 2064 extracts a signal processing region including the second candidate region extracted by the first region remover 2062 and calculates a feature value on the basis of the signal processing region (step S202). Subsequently, the first recognizer 2066 recognizes, on the basis of the feature value calculated by the first feature value calculator 2064, whether the second candidate region is a region of the traffic light (step S204).

On the other hand, the second region remover 2082 extracts, on the basis of the position and the direction of the vehicle, the position information of traffic lights, and the captured image, the second candidate region out of the first candidate regions extracted by the second region extractor 2080 (step S206). The second region remover 2082 performs processing for removing, from the second candidate region, a lighting region, a luminance distribution of which does not satisfy a predetermined condition, using a luminance distribution of the second candidate region (step S208).

Subsequently, the second feature value calculator 2084 extracts signal processing region including the second candidate region extracted by the second region remover 2082 and calculates a feature value on the basis of the signal processing region (step S210). Subsequently, the second recognizer 2086 recognizes, on the basis of the feature value calculated by the second feature value calculator 2084, whether the second candidate region is a lighting region based on a signal lamp (step S212). The lighting region extractor 208 finally extracts, as a lighting region, the second candidate region recognized by the second recognizer 2086 as the lighting region based on the signal lamp. In this way, the traffic light extractor 206 and the lighting region extractor 208 extracts a traffic light region with the recognition processing.

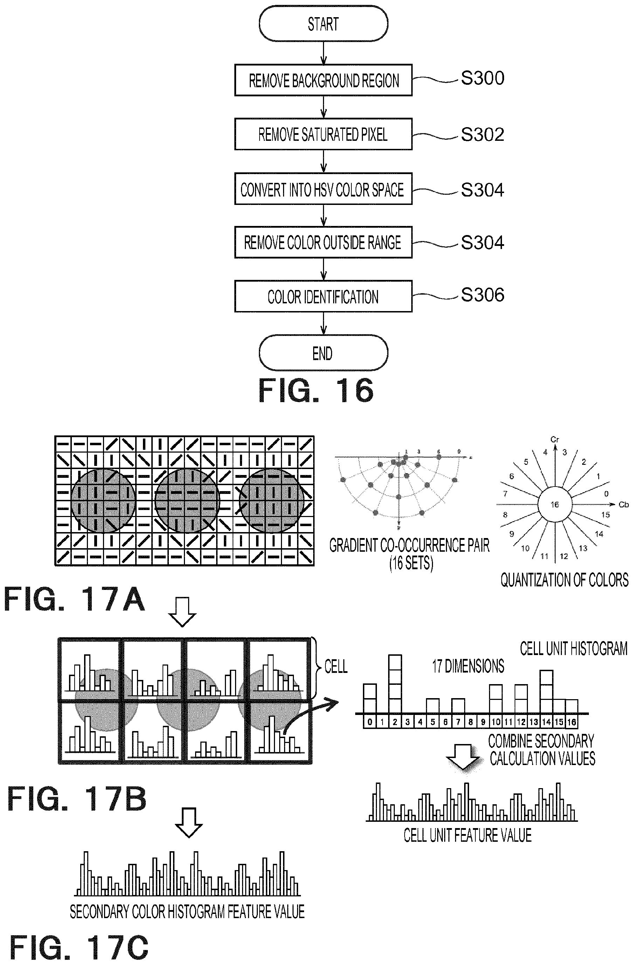

FIG. 16 is a flowchart for explaining an example of color processing of the identifier 210 according to the second embodiment. As shown in FIG. 16, the saturated pixel remover 2102 performs processing for removing a background region and a saturated pixel from the lighting region extracted by the lighting region extractor 208 (steps S300 and S302).

Subsequently, the color processor 2104 coverts the remaining pixels excluding the saturated pixel in the lighting region removed by the saturated pixel remover 2102 into an HSV color system (step S304). Subsequently, the color processor 2104 removes pixels outside a color range corresponding to the position of the lighting region determined by the lighting region position determiner 2100 from the pixels converted into the HSV color system (step S306).

The color identifier 2106 extracts a predetermined color component on the basis of the position of the lighting region in the region of the traffic light determined by the lighting region position determiner 2100 and outputs a signal corresponding to the extracted predetermined color component (step S308). In this way, the identifier 210 applies the color processing corresponding to the position of the lighting region in the region of the traffic light and performs the identification processing for the lighting region.

As explained above, according to this embodiment, the identifier 210 applies the color processing corresponding to the position of the lighting region extracted by the lighting region extractor 208 in the region of the traffic light extracted by the traffic light extractor 206 and identifies the lighting color of the traffic light. Consequently, it is possible to identify a color of a signal lamp according to an amount of a color component that should be present in the lighting position of the traffic light. The identification accuracy is further improved.

### (Modification of the second embodiment)

In a modification of the second embodiment, the first feature value calculator 2064 adds Color-CoHOGs and color histograms as feature values.

FIGS. 17(A) to 17(C) are diagrams showing a calculation example of the Color-CoHOGs. As shown in FIGS. 17(A) to 17(C), the first feature value calculator 2064 calculates color gradient vectors and calculates appearance frequencies of combinations of the color gradient vectors as the Color-CoHOGs.

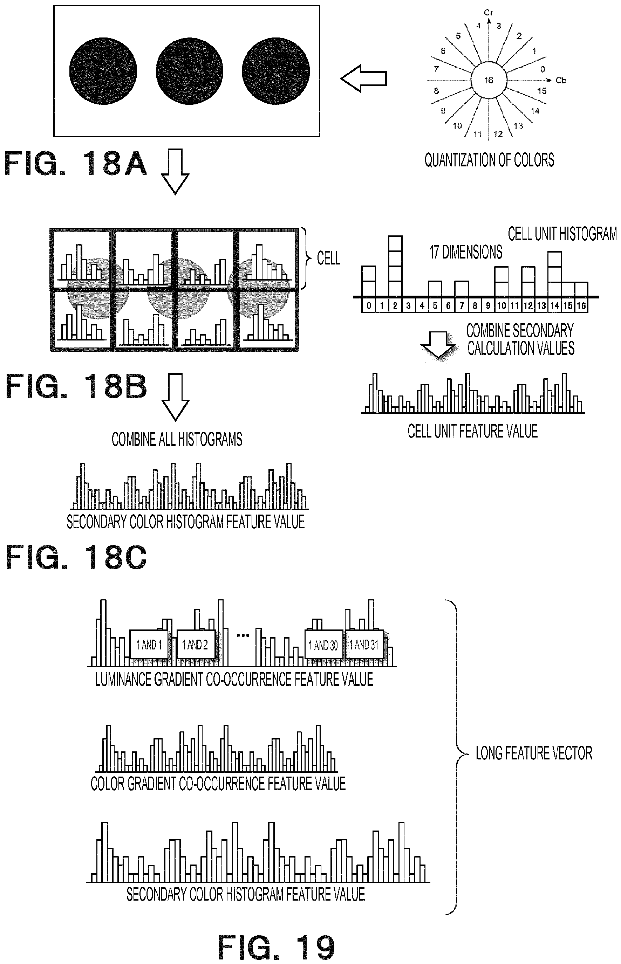

FIGS. 18(A) to 18(C) are diagrams showing a calculation example of the color histograms. As shown in FIGS. 18(A) to 18(C), the first feature value calculator 2064 calculates color gradient vectors and calculates appearance frequencies of combinations of the color gradient vectors as the color histograms.

FIG. 19 is a diagram showing an example of the feature values calculated by the first feature value calculator 2064. As shown in FIG. 19, the first feature value calculator 2064 calculates, in addition to the Co-occurrence Histograms of Oriented Gradients, the Color-CoHOGs and the color histograms as feature values.

Similarly, the second feature value calculator 2084 calculates, in addition to the Co-occurrence Histograms of Oriented Gradients, the Color-CoHOGs and the color histograms as feature values.

As explained above, according to this embodiment, each of the first feature value calculator 2064 and the second feature value calculator 2084 adds the Color-CoHOGs and the color histograms as the feature values. Consequently, it is possible to extract a traffic light region and a lighting region using, for example, information concerning a color gradient. The extraction accuracy of the traffic light region and the lighting region is further improved.In all the embodiments described above, all the circuits may be formed by analog circuits, or formed by digital circuits, or analog circuits and digital circuits in a mixed manner. Furthermore, each circuit may be formed by an integrated circuit (IC), an application specific integrated circuit (ASIC) or a field-programmable gate array (FPGA). Part of all of the functions may be controlled by a program, and information processing by software may be specifically implemented using hardware resources.

For example, all the device may be formed by microprocessor and/or analog circuit implemented or implemented by a dedicated circuit.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A signal identifying device comprising:
a traffic light extractor configured to extract a region of a traffic light in a captured image;
a lighting region extractor configured to extract a lighting region in the captured image; and
an identifier configured to perform processing for identifying a lighting color of the traffic light on the basis of a position of the lighting region in the region of the traffic light.

2. The signal identifying device according to claim 1, wherein the identifier identifies a lighting color of the traffic light when the lighting region is included in the region of the traffic light.

3. The signal identifying device according to claim 1, wherein, when the lighting region is not included in the region of the traffic light, the identifier identifies that the lighting region is not a signal lamp.

4. The signal identifying device according to claim 1, wherein the identifier divides the region of the traffic light into a plurality of regions and identifies the lighting color of the traffic light on the basis of a region including the lighting region among the plurality of regions.

5. The signal identifying device according to claim 1, wherein the identifier divides the region of the traffic light into three regions and outputs, according to in which of the three regions the position of the lighting region is located, at least one output signal among a first output signal corresponding to green, a second output signal corresponding to yellow, and a third output signal corresponding to red.

6. The signal identifying device according to claim 1, wherein
the traffic light extractor extracts the region of the traffic light from a captured image in a first exposure time, and
the lighting region extractor extracts the lighting region from a captured image in a second exposure time shorter than the first exposure time.

7. The signal identifying device according to claim 1, wherein the identifier applies color processing corresponding to the position of the lighting region in the region of the traffic light.

8. The signal identifying device according to claim 7, wherein the identifier applies the color processing corresponding to the position of the lighting region to remaining pixels excluding a saturated pixel in the lighting region.

9. The signal identifying device according to claim 7, wherein the identifier extracts a predetermined color component on the basis of the position of the lighting region in the region of the traffic light and outputs a signal corresponding to the extracted predetermined color component.

10. The signal identifying device according to claim 1, wherein the identifier selects an image in a specific exposure time on the basis of states of luminance distributions of the lighting region in a respective plurality of images captured in different exposure times.

11. The signal identifying device according to claim 1, wherein the traffic light extractor extracts a signal processing region including a candidate region of the traffic light and, when a feature value calculated on the basis of the signal processing region satisfies a predetermined condition, extracts the candidate region as the region of the traffic light.

12. The signal identifying device according to claim 1, wherein, when the lighting region extractor extracts a high-luminance image region and a feature value calculated on the basis of the high-luminance image region satisfies a predetermined condition, the lighting region extractor extracts the high-luminance image region as the lighting region.

13. The signal identifying device according to claim 1, wherein, among a Co-occurrence Histogram of Oriented Gradients obtained by converting combinations of edge directions between two points into a histogram, a Color-CoHOG obtained by converting combinations of color gradients between two points into a histogram, and a color histogram obtained by converting quantized colors into a histogram, the feature value is at least the Co-occurrence Histogram of Oriented Gradients.

14. The signal identifying device according to claim 11, further comprisi ng:
a position detector mounted on a vehicle and configured to detect a position and a traveling direction of the vehicle; and
a storage configured to store position information of the traffic light, wherein
the traffic light extractor extracts the candidate region on the basis of the position and a direction of the vehicle, the position information of the traffic light, and the captured image.

15. A signal identifying method comprising:
extracting a region of a traffic light in an image;
extracting a lighting region in the image; and
identifying a lighting color of the traffic light on the basis of a position of the lighting region in the region of the traffic light.
